(19) Europäisches Patentamt / European Patent Office / Office européen des brevets

(11) **EP 3 190 895 B1**

(12) **FASCICULE DE BREVET EUROPEEN**

(45) Date de publication et mention de la délivrance du brevet:
**12.03.2025 Bulletin 2025/11**

(21) Numéro de dépôt: **15775762.6**

(22) Date de dépôt: **11.09.2015**

(51) Classification Internationale des Brevets (IPC):
*A01N 65/03* (2009.01)    *A01P 17/00* (2006.01)
*A01P 21/00* (2006.01)    *A01N 25/00* (2006.01)

(52) Classification Coopérative des Brevets (CPC):
(C-Sets disponibles)
**A01N 65/03**                    (Cont.)

(86) Numéro de dépôt international:
**PCT/FR2015/052439**

(87) Numéro de publication internationale:
**WO 2016/038320 (17.03.2016 Gazette 2016/11)**

(54) **EXTRAIT D'ALGUES CONCENTRÉ, PROCÉDÉ DE PRÉPARATION ET SES UTILISATIONS EN AGRICULTURE**

KONZENTRIERTES ALGENEXTRAKT, VERFAHREN ZU DESSEN HERSTELLUNG UND SEINE ANWENDUNG IN LANDWIRTSCHAFT

CONCENTRATED ALGAL EXTRACT, PROCESS FOR ITS PREPARATION AND ITS USES IN AGRICULTURE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats de validation désignés:
MA

(30) Priorité: **11.09.2014 FR 1458561**

(43) Date de publication de la demande:
**19.07.2017 Bulletin 2017/29**

(73) Titulaire: **Laboratoires Goëmar**
**35435 Saint Malo (FR)**

(72) Inventeur: HERY, Paul
F-35120 Dol De Bretagne (FR)

(74) Mandataire: **J A Kemp LLP**
**80 Turnmill Street**
**London EC1M 5QU (GB)**

(56) Documents cités:
EP-A1- 0 538 091        WO-A1-2013/120729
KR-B1- 100 984 217

• OFFEI FELIX ET AL: "Seaweed Bioethanol Production: A Process Selection Review on Hydrolysis and Fermentation", FERMENTATION, vol. 4, no. 4, 29 November 2018 (2018-11-29), CH, pages 99, XP093207100, ISSN: 2311-5637, DOI: 10.3390/fermentation4040099
• WAJAHATULLAH KHAN ET AL: "Seaweed Extracts as Biostimulants of Plant Growth and Development", JOURNAL OF PLANT GROWTH REGULATION, vol. 28, no. 4, 8 May 2009 (2009-05-08), pages 386 - 399, XP055133661, ISSN: 0721-7595, DOI: 10.1007/s00344-009-9103-x

(52) Classification Coopérative des Brevets (CPC):
(Cont.)

C-Sets
**A01N 65/03, A01N 25/00**

**Description**

La présente invention concerne un extrait d'algues concentré présentant un pourcentage de matières sèches compris entre 6 et 100%, son procédé de préparation ainsi que ses utilisations en solo ou associé à une autre technologie nutritive, biostimulante ou phytosanitaire, notamment pour favoriser l'émergence, la croissance, le développement, la reproduction des plantes et pour empêcher les oiseaux de manger les semences. L'invention vise également un procédé d'application de l'extrait d'algues concentré de la présente invention ainsi qu'une semence enrobée avec ledit extrait.

L'augmentation des rendements est au cœur des préoccupations des agriculteurs. Or, le rendement dépend grandement du bon développement de la plante et par conséquent de sa croissance, ainsi que de sa bonne santé.

La croissance des plantes est directement liée à l'absorption et à l'assimilation d'éléments minéraux ainsi qu'aux flux hormonaux régissant l'allongement et la différenciation des tissus végétaux. Les nutriments et hormones jouent par conséquent un rôle essentiel dans la croissance des plantes. Du fait de leur incapacité à se déplacer, les plantes ont mis en place des mécanismes actifs et activables leur permettant d'utiliser au mieux les ressources présentes pour favoriser leur croissance. Afin d'augmenter cette croissance, des engrais sont utilisés.

Les algues sont utilisées depuis de nombreuses années en tant qu'amendement organique sur divers types de sols et différentes cultures maraichères et céréalières. Les extraits d'algues sont utilisés en tant que biostimulant, le plus souvent pulvérisés sur les feuilles des plantes. De nombreux effets bénéfiques liés à l'utilisation d'extrait d'algues en agriculture ont été observés et incluent notamment une augmentation du rendement, de l'apport en nutriments, de la résistance au gel et aux conditions de stress, une meilleure durée de conservation des fruits et une diminution des attaques par les champignons et les insectes.

Les extraits d'algues sont également connus pour permettre une meilleure germination des semences, en favorisant notamment l'émergence des plantes. En effet, dès leur émergence, les plantules sont sensibles à des microorganismes pathogènes, tels que des espèces de champignons comme le rhizoctone commun, le pythium, ou des bactéries qui causent une maladie appelée la fonte des semis. Les jeunes pousses attaquées se retrouvent couchées sur le côté, comme si la base de la tige avait été pincée. L'humidité de l'air et les températures basses favorisent l'apparition de la fonte des semis.

De nombreux extraits d'algues sont commercialisés pour leur utilisation en agriculture. Par exemple, la Demanderesse a décrit, dans le brevet EP 0538091 une composition dérivée d'algues marines obtenue selon un procédé comprenant les étapes suivantes :

> a) l'hydrolyse basique d'au moins une algue brune en présence d'un réducteur, à une température comprise entre 50 et 100°C, pendant une durée comprise entre 4 et 8 h ;
> b) la neutralisation de l'hydrolysat ainsi obtenu avec un acide fort jusqu'à l'obtention d'un pH compris entre 6 et 8 ;
> c) une filtration ;
> d) éventuellement une diafiltration ou une électrodialyse du perméat obtenu à l'issue de l'étape c) ; et
> e) éventuellement une réduction à sa poudre du perméat obtenu à l'issue de l'étape c), ou du rétentat obtenu à l'issue de l'étape d).

Toutefois, du fait de l'hydrolyse basique de l'algue à chaud en présence d'un réducteur, certains composés du liquide intracellulaire de l'algue ne sont pas préservés, notamment les polysaccharides, les lipides, les protéines, et les polyphénols, ce qui diminue les propriétés biostimulantes de la composition obtenue avec le procédé décrit ci-dessus.

Les présents inventeurs ont trouvé qu'un extrait d'algues dans lequel les composés du liquide intracellulaire de l'algue sont préservés présentait une excellente activité bio-stimulante lorsqu'il était concentré pour atteindre un certain pourcentage de matière sèche. De manière surprenante, la Demanderesse a constaté que, suite à une application en des quantités comparables, l'extrait d'algues concentré de l'invention est plus efficace qu'un extrait dilué pour stimuler l'émergence et favoriser la croissance des plantes. De plus, lorsque l'extrait d'algues concentré est utilisé pour enrober des semences, celles-ci sont moins attaquées par les oiseaux que des semences non enrobées.

La présente invention a pour objet un extrait d'algues concentré présentant un pourcentage de matières sèches compris entre 6 et 100%, de préférence entre 9 et 70%, plus préférentiellement entre 12 et 50% et contenant 0 à 1% en poids d'alginate et de cellulose par rapport au poids dudit extrait.

Un deuxième objet de la présente invention est un procédé de préparation de cet extrait d'algues concentré selon l'invention comprenant les étapes suivantes :

- broyer les algues jusqu'à éclatement cellulaire ;
- homogénéiser le broyat d'algues en solution aqueuse ;
- retirer l'alginate et la cellulose par floculation et filtration ;
- éventuellement ajuster le pH du filtrat ;
- concentrer le filtrat pour atteindre un pourcentage de matières sèches compris entre 6 et 100%, de préférence entre 9 et 70%, plus préférentiellement entre 12 et 50%.

Un autre objet de la présente invention est un procédé pour favoriser l'émergence, la croissance, le développement et/ou la reproduction d'une plante caractérisé en ce que l'extrait selon l'invention ou préparé selon le procédé de l'invention, est appliqué par infiltration dans le sol, pulvérisé sur les feuilles de la plante, appliqué sur une semence avant le semis ou appliqué sur les racines d'une plantule, notamment par pralinage, avant sa plantation.

Encore un autre objet de la présente invention est l'utilisation d'un extrait selon l'invention ou préparé selon le procédé de l'invention, pour favoriser la croissance de plantes.

La présente invention a également pour objet l'utilisation d'un extrait selon l'invention ou préparé selon le procédé de l'invention, pour stimuler l'émergence de plantes.

Un sixième objet de la présente invention est l'utilisation d'un extrait selon l'invention ou préparé selon le procédé de l'invention, en tant que répulsif oiseaux.

Enfin, l'invention a aussi pour objet une semence enrobée par un extrait selon l'invention ou préparé selon le procédé de l'invention.

L'extrait d'algues concentré de la présente invention est notamment un extrait aqueux ou un extrait sec, présentant un pourcentage de matières sèches compris entre 6 et 100%, de préférence entre 9 et 70%, plus préférentiellement entre 12 et 50%.

Le pourcentage de matières sèches, au sens de la présente invention, est calculé avec la formule suivante :

$$\frac{m_{s\grave{e}che}}{m_{hydrat\acute{e}e}}\times 100$$

où $M_{s\grave{e}che}$ est la masse de matière restante après séchage ; et $m_{hydrat\acute{e}e}$ est la masse de l'extrait d'algues avant séchage. L'extrait d'algues concentré de la présente invention est dépourvu d'alginate et/ou de cellulose. Ainsi, l'extrait d'algues selon l'invention comprend du liquide intracellulaire d'algues obtenu après éclatement des parois cellulaires d'algue et leur élimination par floculation. L'extrait d'algues concentré de la présente invention contient 0 à 1% en poids d'alginate et de cellulose par rapport au poids dudit extrait.

L'algue à partir de laquelle est obtenu l'extrait concentré de la présente invention peut notamment être choisie parmi *Ascophyllum nodosum, Fucus vesiculosus, Laminaria digitata, Laminaria hyperborea, Laminaria saccharina, Eklonia maxima, sargassum spp.* et leurs mélanges. Selon un mode de réalisation particulier, ladite algue est *Ascophyllum nodosum.*

L'extrait d'algues concentré de la présente invention peut notamment présenter un pH compris entre 1,5 et 9, de préférence entre 2 et 7, plus préférentiellement entre 2,5 et 3.

L'extrait d'algues concentré de la présente invention comprend du liquide intracellulaire d'algue. Il peut notamment comprendre un ou plusieurs composés choisis parmi les polysaccharides tels que notamment la laminarine et des fucanes ; des sucres libres et conjugués ; des polyphénols, du mannitol ; des hormones de croissance ; des lipides ; des protéines ; des acides aminés ; des vitamines ; des bétaïnes ; des stérols ; de l'acide glucuronique, et des sels minéraux. Selon un mode de réalisation particulier, l'extrait d'algues concentré de la présente invention comprend de la laminarine ; des fucanes ; des lipides ; des protéines ; et des polyphénols.

Selon un mode de réalisation particulier, l'extrait d'algues concentré de la présente invention peut être formulé dans une composition comprenant ledit extrait et au moins un composé choisi parmi un gélifiant, un épaississant, un produit phytosanitaire, un deuxième extrait de plante et/ou d'algue, des minéraux, un tensioactif, une huile, un conservateur, et leurs mélanges.

L'extrait d'algues concentré de la présente invention peut notamment être obtenu par le procédé décrit ci-après.

Le procédé de préparation d'un extrait d'algues concentré selon la présente invention comprend les étapes suivantes :

- broyer les algues jusqu'à éclatement cellulaire ;
- homogénéiser le broyat d'algues en solution aqueuse ;
- retirer l'alginate et la cellulose par floculation et filtration ;
- éventuellement ajuster le pH du filtrat ;
- concentrer le filtrat pour atteindre un pourcentage de matières sèches compris entre 6 et 100%, de préférence entre 9 et 70%, plus préférentiellement entre 12 et 50%.

Le procédé de la présente invention ne comprend pas d'étape d'hydrolyse, en présence d'un réducteur, par exemple à une température comprise entre 50 et 100°C, pendant une durée comprise entre 4 et 8 h. Cela permet en effet de préserver les composés du liquide intracellulaire de l'algue, notamment les polysaccharides.

L'étape de broyage permet notamment d'éclater les parois cellulaires des algues, libérant ainsi le liquide intracellulaire d'algue. L'étape de broyage est préférentiellement réalisée sur des algues fraiches, c'est-à-dire des algues récoltées depuis moins de 24h.

L'étape d'homogénéisation du broyat d'algues peut notamment être réalisée en ajoutant de l'eau à raison de 1 à 2 L d'eau par kg de broyat d'algue.

L'étape de floculation et de filtration permet notamment d'éliminer les résidus des parois cellulaires des algues afin de recueillir le liquide intracellulaire d'algue. Les résidus des parois cellulaires des algues peuvent notamment précipiter par floculation en ajoutant au broyat d'algues un acide, en particulier l'acide chlorhydrique. Selon un mode de réalisation particulier de la présente invention, l'acide est ajouté de façon à obtenir un pH compris entre 1,5 et 4, de préférence entre 2 et 3,5, plus préférentiellement entre 2,5 et 3.

Le mélange acidifié est ensuite filtré afin d'éliminer les flocs d'alginate et de cellulose ayant une taille supérieure à 40 $\mu$m.

Le pH du filtrat peut éventuellement être ajusté en ajoutant un acide ou une base de façon à atteindre un pH compris entre 1,5 et 9, de préférence entre 2 et 7, plus préférentiellement entre 2,5 et 3.

L'étape de concentration du filtrat peut être réalisée de diverses manières, telles que notamment l'osmose inverse, l'évaporation d'eau, l'enrichissement en algue ou la centrifugation.

L'osmose inverse est une technique membranaire de séparation basée sur un processus de sélectivité par diffusion. Deux extraits d'algues de concentrations différentes sont placés de part et d'autre d'une membrane perméable à l'eau. Lorsqu'une pression est appliquée sur l'extrait d'algues le plus concentré, une partie de l'eau contenue dans l'extrait le plus concentré migre vers l'extrait le moins concentré.

L'évaporation d'eau peut notamment être réalisée en chauffant l'extrait d'algues à pression réduite, par exemple avec un évaporateur rotatif. Le chauffage peut être effectué entre 40 et 90°C, de préférence entre 60 et 80°C.

L'enrichissement en algue peut notamment être réalisé en remplaçant, dans l'étape d'homogénéisation du broyat d'algues du procédé selon l'invention, l'eau par une suspension d'algues obtenue par le procédé selon l'invention.

La centrifugation peut notamment être réalisée en soumettant l'extrait d'algues à la force centrifuge dans une machine tournant à grande vitesse.

De préférence, l'étape de concentration du filtrat est réalisée par évaporation d'eau.

L'extrait d'algues concentré selon la présente invention est avantageusement utilisé en agriculture où il trouve de nombreuses applications en fonction du type de plante sur lequel il est appliqué et de la période du cycle de la plante où il est utilisé.

L'extrait d'algues concentré de la présente invention peut notamment être utilisé seul ou en association avec une composition nutritive, biostimulante ou phytosanitaire.

Les plantes sur lesquelles l'extrait d'algues concentré de la présente invention peut être utilisé sont les plantes agronomiquement utiles, par exemple les cultures légumières, fruitières et céréalières, et les plantes ornementales. Les plantes agronomiquement utiles sont des angiospermes choisies dans le groupe comprenant les Apiacées, les Astéracées, les Brassicacées, les Chénopodiacées, les Convolvulacées, les Cucurbitacées, les Fabacées, les Graminées, les Liliacées, les Polygonacées, les Rosacées, les Solanacées, les Poacées, les Vitacées. Selon un mode de réalisation particulier, l'extrait d'algues concentré de la présente invention est utilisé sur la tomate, le riz, le soja, les arbres fruitiers, la vigne, le blé ou le maïs.

Ainsi, lorsque l'extrait d'algues concentré de la présente invention est utilisé pour favoriser la croissance de la plante, ledit extrait peut notamment être appliqué par pulvérisation foliaire ou par application au sol ou infiltration racinaire. Les applications peuvent être réalisées tout au long de la croissance de la plante, une ou plusieurs fois par semaine. Des résultats tout à fait intéressants ont été démontrés sur des plants de tomates et sur des plants de maïs.

Quand l'extrait d'algues concentré de la présente invention est utilisé pour stimuler l'émergence des plantes et/ou pour apporter un effet répulsif oiseau, ledit extrait peut notamment être appliqué sur les semences avant que celles-ci soient plantées ou sur les jeunes plantules juste après émergence. Les semences peuvent notamment être enrobées avec l'extrait d'algues concentré de la présente invention. L'enrobage peut, par exemple, être réalisé en mouillant les semences avec ledit extrait et en les laissant sécher, de préférence à température ambiante. L'application peut être réalisée à hauteur de 10 à 120 g de préférence 20 à 110 g, plus préférentiellement 30 à 105 g d'extrait concentré d'algues pour 100 kg de semences. Des résultats tout à fait intéressants ont été démontrés sur des graines de maïs.

La semence enrobée objet de la présente invention peut notamment être préparée comme décrit au paragraphe précédent. L'enrobage de la semence par l'extrait d'algues concentré de la présente invention permet une émergence de la plante plus rapide et la rendre plus résistante à la fonte des semis, par rapport à des semences non enrobées. De plus, les semences enrobées selon la présente invention sont beaucoup moins attaquées par les oiseaux, tels que notamment les corbeaux, les pigeons, les alouettes, les perdrix et les faisans par rapport à des semences non enrobées.

L'invention va être décrite de façon plus détaillée ci-dessous à l'aide des exemples suivants qui sont donnés à titre d'illustration uniquement.

FIGURES

La figure 1 est une représentation schématique du nombre de plants de maïs obtenus 3 semaines après le semis de graines de maïs non enrobées, enrobées avec un extrait d'algues de la présente invention ou enrobées avec un fongicide classique tel que décrit à l'exemple 4.

La figure 2 est une représentation schématique du nombre de plants de maïs obtenus 3 semaines après le semis de graines de maïs non enrobées, enrobées avec un extrait d'algues de la présente invention ou enrobées avec un fongicide classique tel que décrit à l'exemple 5.

EXEMPLES

Exemple 1 : Préparation d'un extrait d'algues concentré

Un extrait d'algues *Ascophyllum nodosum* présentant un pourcentage de matières sèches de 5.1%, dénommé GOACTIV par la société Demanderesse, est concentré par évaporation d'eau en chauffant l'extrait à 50°C dans un évaporateur rotatif sous vide (trompe à eau) jusqu'à ce que le pourcentage de matières sèches atteigne 13%.

Exemple 2 : Application de l'extrait d'algues concentré sur des plants de tomates

Sur des plants de tomates, au stade 3 feuilles (3 semaines), on pulvérise une fois par semaine sur les feuilles une quantité d'extrait par plante telle qu'indiquée dans le tableau suivant :

| Extrait d'algues | Comparatif GOACTIV | Selon l'invention (Exemple 1) |
|---|---|---|
| % de matières sèches | 5.1% | 13% |
| Quantité d'extrait pulvérisé par plant | 0,03 mg | 0,01 mg |

Les plants de tomates sont donc traités avec des quantités comparables de chaque extrait.
Après 5 semaines de traitement, les plants de tomates traités avec l'extrait d'algues concentré de la présente invention (Exemple 1) sont plus hauts et plus touffus que les plants traités avec l'extrait d'algues non-concentré (GOACTIV). Pour des quantités d'extrait appliquées comparables, l'extrait d'algues concentré de la présente invention est donc plus efficace pour favoriser la croissance des plants de tomates qu'un extrait plus dilué.

Exemple 3 : Enrobage de semences de maïs avec l'extrait d'algues concentré

On mouille 100 kg de graines de maïs avec 100 g d'extrait d'algues concentré préparé à l'exemple 1 dans un mélangeur rotatif. On laisse ensuite sécher les graines à 20-25°C pendant 24 heures.

Exemple 4 : Effet de l'enrobage des semences sur l'émergence de plants de maïs

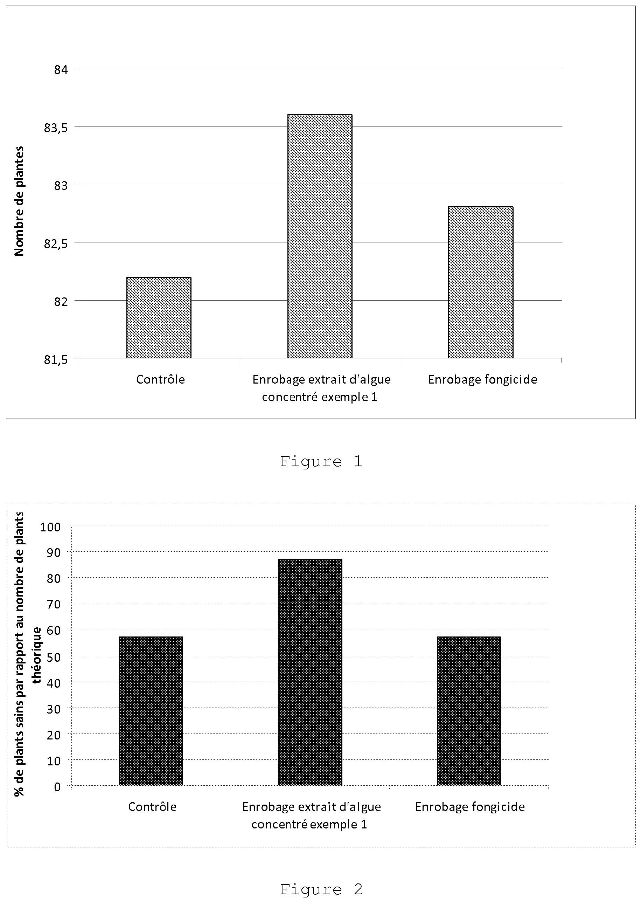

Les graines de maïs enrobées préparées à l'exemple 3 sont semées sur des parcelles de 20 m$^2$. Un contrôle est réalisé avec des graines de maïs non traitées. Un essai comparatif est réalisé avec des graines de maïs enrobées avec un fongicide classique comprenant 25 g/l de fludioxonil et 9,7 g/l de métalaxyl-M.
3 semaines après le semis, le nombre de plants de maïs est compté. Les résultats sont présentés à la Figure 1. On remarque que l'émergence des plants de maïs est favorisée lorsque les graines sont enrobées avec l'extrait d'algues concentré préparé selon l'exemple 1 par rapport aux graines non enrobées ou aux graines enrobées avec le fongicide. L'exemple 4 a été reproduit et a donné des résultats analogues.

Exemple 5 : Effet répulsif oiseaux de l'enrobage des semences

Au cours d'une des expériences selon l'exemple 4, le champ a subi une attaque de corbeaux particulièrement agressive. Les oiseaux attaquent les semences enfouies dans le sol ce qui entraine une diminution du nombre des plants de maïs sains par rapport au nombre de semences plantées.
Les résultats sont présentés à la Figure 2, les valeurs sur l'axe des ordonnées étant exprimées en pourcentage de plants de maïs sains par rapport au nombre de plants théorique.

Une nette différence dans le niveau d'attaque entre les parcelles contrôle ou celles traitées avec le fongicide et les parcelles dont les semences étaient enrobées avec l'extrait d'algues concentré de l'exemple 1 a été observée. Ainsi, les parcelles ayant été semées avec des semences traitées avec l'extrait d'algues concentré de l'exemple 1 ont été relativement épargnées par les oiseaux.

L'extrait d'algues concentré de la présente invention a donc un effet répulsif oiseau.

L'exemple 5 a été reproduit et a donné des résultats analogues.

## Revendications

1. Procédé de préparation d'un extrait d'algues concentré **caractérisé en ce qu'**il contient 0 à 1 % en poids d'alginate et de cellulose par rapport au poids dudit extrait, ledit procédé comprenant les étapes suivantes:

   - broyer les algues jusqu'à éclatement cellulaire;
   - homogénéiser le broyat d'algues en solution aqueuse;
   - retirer l'alginate et la cellulose par floculation et filtration;
   - éventuellement ajuster le pH du filtrat ;
   - concentrer le filtrat pour atteindre un pourcentage de matières sèches compris entre 6 et 100%,

   ledit procédé ne comprenant pas d'étape d'hydrolyse en présence d'un réducteur.

2. Procédé selon la revendication 1, **caractérisé en ce que** l'étape de concentration du filtrat est réalisée par osmose inverse, par évaporation d'eau, par enrichissement en algue ou par centrifugation.

3. Extrait d'algues concentré susceptible d'être obtenu par le procédé objet de l'une quelconque des revendications 1 ou 2, **caractérisé en ce qu'**il présente un pourcentage de matières sèches compris entre 6 et 100% et **en ce qu'**il contient 0 a 1 %en poids d'alginate et de cellulose par rapport au poids dudit extrait.

4. Extrait selon la revendication 3, **caractérisé en ce que** l'algue est choisie parmi *Ascophyllum nodosum, Fucus vesiculosus, Laminaria digitata, Laminaria hyperborea, Laminaria saccharina, Eklonia maxima, Sargassum spp.* et leurs mélanges.

5. Extrait selon la revendication 3 ou 4, **caractérisé en ce qu'**il présente un pH compris entre 1,5 et 9.

6. Procédé pour favoriser l'émergence, la croissance, le développement et/ou la reproduction d'une plante **caractérisé en ce que** l'extrait tel que défini à l'une quelconque des revendications 3 à 5, est appliqué par infiltration dans le sol, pulvérisé sur les feuilles de la plante, appliqué sur une semence avant le semis ou appliqué sur les racines d'une plantule, notamment par pralinage, avant sa plantation.

7. Utilisation d'un extrait tel que défini à l'une quelconque des revendications 3 à 5, pour favoriser la croissance de plantes.

8. Utilisation d'un extrait tel que défini à l'une quelconque des revendications 3 à 5, pour stimuler l'émergence de plantes.

9. Utilisation d'un extrait tel que défini à l'une quelconque des revendications 3 à 5, en tant que répulsif oiseaux.

10. Semence enrobée par un extrait tel que défini à l'une quelconque des revendications 3 à 5.

## Patentansprüche

1. Verfahren zur Herstellung eines konzentrierten Algenextrakts, **dadurch gekennzeichnet, dass** er 0 bis 1 Gewichts-% Alginat und Cellulose, bezogen auf das Gewicht des Extrakts, enthält, das Verfahren umfassend die folgenden Schritte:

   - Zerkleinern der Algen, bis die Zellen aufbrechen;
   - Homogenisieren der zerkleinerten Algen in wässriger Lösung;

- Entnehmen des Alginats und der Cellulose durch Ausflocken und Filtern;
- eventuell, Einstellen des pH des Filtrats;
- Konzentrieren des Filtrats, um einen Prozentsatz an Trockensubstanz zwischen 6 und 100 % zu erreichen,

wobei das Verfahren keinen Hydrolyseschritt in Anwesenheit eines Reduktionsmittels umfasst.

2. Verfahren nach Anspruch 1, **dadurch gekennzeichnet, dass** der Schritt eines Konzentrierens des Filtrats durch Umkehrosmose, durch Wasserverdampfung, durch Algenanreicherung oder Zentrifugation durchgeführt wird.

3. Konzentrierter Algenextrakt, erlangbar durch das Verfahren nach einem der Ansprüche 1 oder 2, **dadurch gekennzeichnet, dass** er einen Prozentsatz an Trockensubstanz von 6 bis 100 % aufweist und dass er 0 bis 1 Gewichts-% Alginat und Cellulose, bezogen auf das Gewicht des Extrakts, enthält.

4. Extrakt nach Anspruch 3, **dadurch gekennzeichnet, dass** die Alge ausgewählt ist aus *Ascophyllum nodosum, Fucus vesiculosus, Laminaria digitata, Laminaria hyperborea, Laminaria saccharina, Eklonia maxima, Sargassum spp.* und deren Gemischen.

5. Extrakt nach Anspruch 3 oder 4, **dadurch gekennzeichnet, dass** er einen pH zwischen 1,5 und 9 aufweist.

6. Verfahren zum Fördern des Aufkommens, des Wachstums, der Entwicklung und/oder der Fortpflanzung einer Pflanze, **dadurch gekennzeichnet, dass** der Extrakt, wie definiert in einem der Ansprüche 3 bis 5, durch Infiltration in den Boden aufgebracht, auf die Blätter der Pflanze gesprüht, auf einen Samen vor der Aussaat aufgebracht oder auf die Wurzeln eines Keimlings, insbesondere durch Einschlämmen, vor dessen Einpflanzen aufgebracht wird.

7. Verwendung eines Extrakts, wie definiert in einem der Ansprüche 3 bis 5 definiert, zum Fördern des Pflanzenwachstums.

8. Verwendung eines Extrakts, wie definiert in einem der Ansprüche 3 bis 5, zum Stimulieren des Aufkommens von Pflanzen.

9. Verwendung eines Extrakts, wie definiert in einem der Ansprüche 3 bis 5 definiert, als Abwehrmittel gegen Vögel.

10. Samen, der mit einem Extrakt wie definiert in einem der Ansprüche 3 bis 5 beschichtet ist.

## Claims

1. Method for preparing a concentrated algae extract, **characterised in that** it contains 0 to 1% by weight of alginate and cellulose relative to the weight of said extract, said method comprising the following steps:

   - grinding the algae until the cells burst;
   - homogenising the algae ground material in an aqueous solution;
   - removing the alginate and cellulose via flocculation and filtration;
   - optionally adjusting the pH of the filtrate;
   - concentrating the filtrate to achieve a percentage of dry matter of between 6 and 100%,

   said method not comprising a hydrolysis step in the presence of a reducing agent.

2. Method according to claim 1, **characterised in that** the filtrate concentration step is carried out by reverse osmosis, by evaporation of water, by enrichment in algae or by centrifugation.

3. Concentrated algae extract that can be obtained via the method which is the subject matter of any one of claims 1 or 2, **characterised in that** it has a percentage of dry matter of between 6 and 100% and **in that** it contains 0 to 1% by weight of alginate and cellulose relative to the weight of said extract.

4. Extract according to claim 3, **characterised in that** the algae is chosen from Ascophyllum nodosum, *Fucus vesiculosus, Laminaria digitata, Laminaria hyperborea, Laminaria saccharina, Ecklonia maxima, Sargassum spp.* and mixtures thereof.

5. Extract according to claim 3 or 4, **characterised in that** it has a pH of between 1.5 and 9.

6. Method for promoting the emergence, growth, development and/or reproduction of a plant, **characterised in that** the extract as defined in any one of claims 3 to 5 is applied by infiltration into the soil, sprayed on the leaves of the plant, applied to a seed before sowing or applied to the roots of a seedling, in particular by pralinage, before planting.

7. Use of an extract as defined in any of claims 3 to 5, for promoting the growth of plants.

8. Use of an extract as defined in any of claims 3 to 5, for stimulating the emergence of plants.

9. Use of an extract as defined in any of claims 3 to 5, as a bird repellent.

10. Seed coated with an extract as defined in any of claims 3 to 5.

Figure 1

Figure 2

**RÉFÉRENCES CITÉES DANS LA DESCRIPTION**

**Documents brevets cités dans la description**

- EP 0538091 A